# EUROPÄISCHE PATENTSCHRIFT

(11) **EP 1 247 008 B1**
(45) Veröffentlichungstag und Bekanntmachung des Hinweises auf die Patenterteilung: **05.04.2006**
(21) Anmeldenummer: 00993731.9
(22) Anmeldetag: 21.11.2000
(51) Int. Cl.: F01N 11/00

(54) **VERFAHREN ZUM BETREIBEN EINES DREIWEGEKATALYSATORS EINER BRENNKRAFTMASCHINE**
METHOD FOR OPERATING A THREE-WAY CATALYST OF AN INTERNAL COMBUSTION ENGINE
PROCEDE POUR FAIRE FONCTIONNER UN CATALYSEUR A TROIS VOIES DANS UN MOTEUR A COMBUSTION INTERNE

(30) Priorität: 31.12.1999 DE 19963938
(43) Veröffentlichungstag der Anmeldung: 09.10.2002
(73) Patentinhaber: ROBERT BOSCH GMBH, 70442 Stuttgart (DE)
(72) Erfinder: SCHNAIBEL, Eberhard, 71282 Hemmingen (DE); KORING, Andreas, 71636 Ludwigsburg (DE); BELLMANN, Holger, 71636 Ludwigsburg (DE); WAHL, Thomas, 75172 Pforzheim (DE); BLUMENSTOCK, Andreas, 71638 Ludwigsburg (DE); WINKLER, Klaus, 71277 Rutesheim (DE); STANGLMEIER, Frank, 71696 Möglingen (DE); SCHUMANN, Bernd, 71277 Rutesheim (DE)
(86) Internationale Anmeldenummer: PCT/DE2000/004103
(87) Internationale Veröffentlichungsnummer: WO 2001/049991

(56) Entgegenhaltungen:
- EP-A- 0 936 349
- US-A- 5 426 934
- DATABASE WPI Section Ch, Week 200009 Derwent Publications Ltd., London, GB; Class E36, AN 2000-100476 XP002166999 & JP 11 294149 A (MITSUBISHI MOTOR CORP), 26. Oktober 1999 (1999-10-26)
- M SIDERIS: "Methods for monitoring and diagnosing the efficiency of catalytic converters" , EPO APPLIED TECHNOLOGY SERIES. VOL. 14. STUDIES IN SURFACE SCIENCE AND CATALYSIS. VOL. 115,NL,AMSTERDAM, ELSEVIER, PAGE(S) 335-349 XP002132451 ISBN: 0-444-82952-0 Seite 335 -Seite 349; Abbildungen
- PATENT ABSTRACTS OF JAPAN vol. 015, no. 237 (P-1216), 19. Juni 1991 (1991-06-19) & JP 03 073839 A (NISSAN MOTOR CO LTD), 28. März 1991 (1991-03-28)

## Beschreibung

### Stand der Technik

Die Erfindung betrifft ein Verfahren zum Betreiben eines Dreiwegekatalysators einer Brennkraftmaschine insbesondere eines Kraftfahrzeugs nach dem Oberbegriff des Anspruchs 1. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuerterät und eine derartige Brennkraftmaschine sind aus der US-A-5426934 bekannt.

Ganz allgemein ist es von einer sogenannten Saugrohreinspritzung bekannt, den Kraftstoff während der Ansaugphase in das Ansaugrohr der Brennkraftmaschine einzuspritzen. Die bei der Verbrennung des Kraftstoffs entstehenden Stickoxide werden in dem Dreiwegekatalysator unter anderem in Stickstoff und Sauerstoff konvertiert. Es ist bekannt, dass der Dreiwegekatalysator einer Alterung unterliegt, die zu einer Einschränkung seiner Konvertierungsfähigkeit führt. Weiterer Stand der Technik ist aus der JP-A-11294149 bekannt.

### Aufgabe und Vorteile der Erfindung

Aufgabe der Erfindung ist es, ein Verfahren zum Betreiben eines Dreiwegekatalysators einer Brennkraftmaschine zu schaffen, mit dem die Alterung des Dreiwegekatalysators erkannt werden kann.

Diese Aufgabe wird bei einem Verfahren der eingangs genannten Art erfindungsgemäß durch die Merkmale des kennzeichnenden Teils des Anspruchs 1 gelöst. Bei einem Steuergerät und einer Brennkraftmaschine der jeweils eingangs genannten Art wird die Aufgabe entsprechend gelöst.

Das Profil bzw. die Lage der hinter dem zu überprüfenden Dreiwegekatalysator gemessenen und über Lambda aufgetragenen NOx-Emissionen stellt ein Gütemaß für die Alterung des Dreiwegekatalysators dar. Aus diesem Profil kann somit auf den Alterungszustand desselben geschlossen werden. Dies stellt eine besonders einfache, aber trotzdem genaue Art dar, die Alterung des Dreiwegekatalysators zu erkennen. Insbesondere ist dabei keine Messung von Lambda und damit kein hochgenauer Lambda-Sensor hinter dem Dreiwegekatalysator erforderlich.

Erfindungsgemäß werden die NOx-Rohemissionen der Brennkraftmaschine ermittelt, und es wird aus den NOx-Rohemissionen und den gemessenen NOx-Emissionen auf den Alterungszustand des Dreiwegekatalysators geschlossen. Auf diese Weise werden zusätzlich zu den gemessenen NOx-Emissionen auch noch die Rohemissionen der Brennkraftmaschine berücksichtigt. Dies führt zu einer höheren Genauigkeit bei der Ermittlung des Alterungszustands des Dreiwegekatalysators.

Bei einer vorteilhaften Ausgestaltung der Erfindung werden die gemessenen NOx-Emissionen mit bekannten NOx-Emissionen für einen noch nicht gealterten Dreiwegekatalysator und/oder einen gealterten Dreiwegekatalysator verglichen. Bei diesem Verfahren werden die gemessenen NOx-Emissionen direkt weiterverwendet. Das Verfahren erfordert damit nur einen geringen Aufwand und kann äußerst schnell durchgeführt werden.

Besonders vorteilhaft ist es, wenn aus den NOx-Rohemissionen und den gemessenen NOx-Emissionen die Konvertierung des Dreiwegekatalysators berechnet wird, und wenn die berechnete Konvertierung mit bekannten Konvertierungen für einen noch nicht gealterten Dreiwegekatalysator und/oder einen gealterten Dreiwegekatalysator verglichen werden.

Bei einer vorteilhaften Weiterbildung der Erfindung wird ein Maximalwert und/oder ein Minimalwert und/oder eine Fläche und/oder eine Steilheit der gemessenen NOx-Emissionen bzw. der berechneten Konvertierung zur Ermittlung des Alterungszustands des Dreiwegekatalysators herangezogen. Auf diese Weise kann das erfindungsgemäße Verfahren weiter vereinfacht werden. Insbesondere die Verwendung der über Lambda aufgetragene Steilheit bringt den Vorteil mit sich, dass ein Offset eines verwendeten NOx-Sensors keinen Einfluss mehr auf den ermittelten Alterungszustand des Dreiwegekatalysators hat.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Ausführungsbeispiele der Erfindung

- Figur 1: zeigt eine schematische Darstellung eines Ausführungsbeispiels einer erfindungsgemäßen Brennkraftmaschine,
- Figur 2: zeigt ein schematisches Schaubild des Verlaufs von NOx-Emissionen über Lambda, und
- Figur 3: zeigt ein schematisches Schaubild des Verlaufs von Konvertierungen über Lambda.

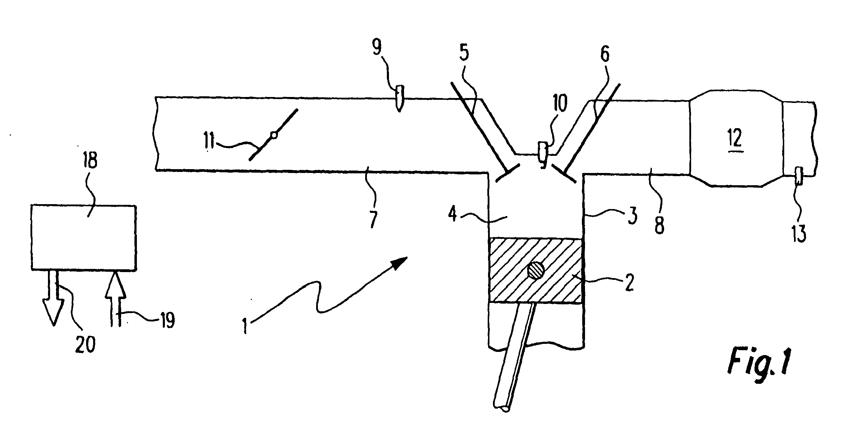

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Ansaugrohr 7 ist ein Einspritzventil 9 vorhanden. Im Bereich des Einlaßventils 5 und des Auslaßventils 6 ragt eine Zündkerze 10 in den Brennraum 4. Über das Einspritzventil 9 kann Kraftstoff in das Ansaugrohr 7 eingespritzt werden. Mit der Zündkerze 10 kann das angesaugte Luft/Kraftstoff-Gemisch in dem Brennraum 4 entzündet werden.

In dem Ansaugrohr 7 ist eine drehbare Drosselklappe 11 untergebracht. Die Menge der dem Brennraum 4 zugeführten Luft ist abhängig von der Winkelstellung der Drosselklappe 11. In dem Abgasrohr 8 ist ein Katalysator untergebracht, der der Reinigung der durch die Verbrennung des Kraftstoffs entstehenden Abgase dient.

Bei dem Katalysator handelt es sich um einen Dreiwegekatalysator 12. Der Dreiwegekatalysator 12 ist dazu vorgesehen, Stickoxide (NOx) unter anderem in Stickstoff, Sauerstoff, Kohlendioxid und Wasser zu konvertieren. In dem Abgasrohr unmittelbar nach dem Dreiwegekatalysator 12 ist ein NOx-Sensor 13 vorgesehen, der dazu geeignet ist, die NOx-Emissionen in dem aus dem Dreiwegekatalysator 12 ausströmenden Abgas zu messen.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Im Betrieb der Brennkraftmaschine 1, insbesondere bei Lambda größer Eins und damit magerem Betrieb entstehen Stickoxide. Der Dreiwegekatalysators 12 wird von diesen Stickoxiden beaufschlagt. Diese werden von dem Dreiwegekatalysator 12 in Stickstoff, Sauerstoff, Kohlendioxid und Wasser konvertiert.

Die thermische Beanspruchung des Dreiwegekatalysators 12 während seines Betriebs führt zu einer Einschränkung der allgemeinen Konvertierungsfähigkeit des Dreiwegekatalysators 12, die nachfolgend als Alterung bezeichnet wird.

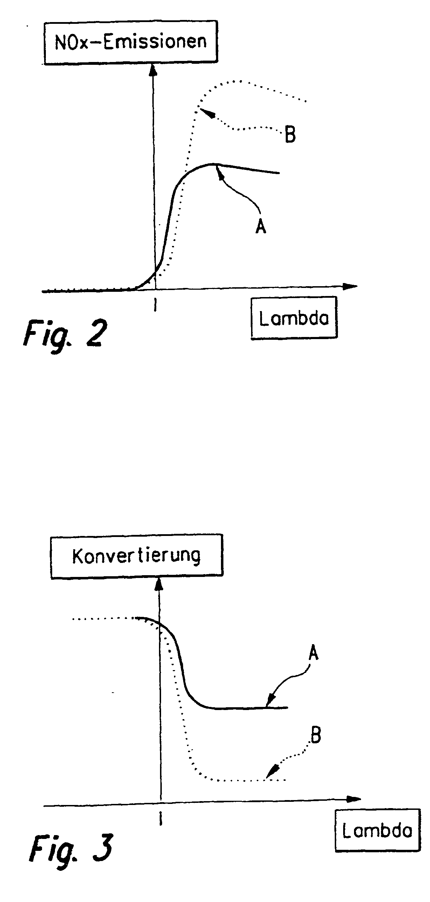

In der Figur 2 ist der Zusammenhang zwischen den von dem NOx-Sensor 13 gemessenen NOx-Emissionen und Lambda aufgetragen. Eine Kurve A gehört zu einem noch nicht gealterten Dreiwegekatalysator 12 und eine Kurve B gehört zu einem gealterten Dreiwegekatalysator 12. Diese Kurven A und B können vorab ermittelt und in dem Steuergerät 18 abgespeichert werden.

Aus dem Schaubild ergibt sich einerseits, daß die NOx-Emissionen etwa beim Übergang von Lambda von einem fetten Betrieb in einen mageren Betrieb, also etwa bei Lambda gleich Eins einen Sprung von einem geringen Wert auf einen größeren Wert aufweisen. Dieser Sprung ist als solcher unabhängig von der Alterung des Dreiwegekatalysators 12. Andererseits zeigt das Schaubild, daß der Sprung bei einem gealterten Dreiwegekatalysator 12 (Kurve B) größer ist als bei einem noch nicht gealterten Dreiwegekatalysator 12 (Kurve A). Dies bedeutet, daß die NOx-Emissionen bei einem gealterten Dreiwegekatalysator 12 größer sind als bei einem noch nicht gealterten Dreiwegekatalysator 12.

Von dem Steuergerät 18 wird ein Übergang von einem fetten Betrieb in einen mageren Betrieb der Brennkraftmaschine 1 durchgeführt. Dabei werden von dem NOx-Sensor 13 die NOx-Emissionen nach dem Dreiwegekatalysator 12 gemessen. In Abhängigkeit von der Lage der über Lambda aktuell gemessenen NOx-Emissions-Kurve im Vergleich zu den bekannten Kurven A und B wird von dem Steuergerät 18 auf den Alterungszustand des Dreiwegekatalysators 12 geschlossen.

Hierzu ist es möglich, daß das Steuergerät 18 eine der folgenden Kriterien oder Kombinationen dieser Kriterien zum Vergleich mit den Kurven A und B und damit zur Ermittlung des Alterungszustands heranzieht: es wird aus dem aktuell gemessenen Maximalwert der NOx-Emissionen auf den Alterungszustand geschlossen und/oder es wird aus der unter der aktuell gemessenen Kurve vorhandenen Fläche auf den Alterungszustand geschlossen und/oder es wird aus der Steilheit der aktuell gemessenen Kurve, also aus dNOx/dLambda, auf den Alterungszustand des Dreiwegekatalysators 12 geschlossen.

In der Figur 3 ist der Zusammenhang zwischen der von dem Dreiwegekatalysator 12 erreichten Konvertierung und Lambda aufgetragen. Unter dieser Konvertierung ist das Verhältnis der Differenz der von der Brennkraftmaschine 1 in das Abgasrohr 8 ausgestoßenen NOx-Rohemissionen zu den von dem Sensor 13 hinter dem Dreiwegekatalysator 12 gemessenen NOx-Emissionen bezogen auf die NOx-Rohemissionen zu verstehen. Eine Kurve A der Figur 3 gehört zu einem noch nicht gealterten Dreiwegekätalysator 12 und eine Kurve 3 gehört zu einem gealterten Dreiwegekatalysator 12. Diese Kurven A und B können vorab ermittelt und in dem Steuergerät 18 abgespeichert werden.

Aus dem Schaubild ergibt sich einerseits, daß die Konvertierung etwa beim Übergang von Lambda von einem fetten Betrieb in einen mageren Betrieb, also etwa bei Lambda gleich Eins einen Sprung von einem hohen Wert auf einen geringeren Wert aufweist. Dieser Sprung ist als solcher unabhängig von der Alterung des Dreiwegekatalysators 12. Andererseits zeigt das Schaubild, daß der Sprung bei einem gealterten Dreiwegekatalysator 12 (Kurve B) größer ist als bei einem noch nicht gealterten Dreiwegekatalysator 12 (Kurve A). Dies bedeutet mit anderen Worten, daß mit einem gealterten Dreiwegekatalysator 12 nur noch eine geringere Konvertierung der NOx-Rohemissionen erreichbar ist als bei einem noch nicht gealterten Dreiwegekatalysator 12.

Die von der Brennkraftmaschine 1 erzeugten NOx-Rohemissionen werden von dem Steuergerät 18 z.B. mittels einer Modellierung ermittelt. In Abhängigkeit davon sowie in Abhängigkeit von den aktuell von dem NOx-Sensor 13 gemessenen NOx-Emissionen wird von dem Steuergerät 18 die zugehörige Konvertierung berechnet. In Abhängigkeit von dem Profil bzw. der Lage der über Lambda aktuell berechneten Konvertierungskurve im Vergleich zu den bekannten Kurven A und B wird von dem Steuergerät 18 auf den Alterungszustand des Dreiwegekatalysators 12 geschlossen.

Hierzu ist es möglich, daß das Steuergerät 18 eine der folgenden Kriterien oder Kombinationen dieser Kriterien zum Vergleich mit den Kurven A und B und damit zur Ermittlung des Alterungszustands heranzieht: es wird aus dem aktuell berechneten Minimalwert und/oder Maximalwert der Konvertierung auf den Alterungszustand geschlossen und/oder es wird aus der unter der aktuell berechneten Kurve vorhandenen Fläche auf den Alterungszustand geschlossen und/oder es wird aus der Steilheit der aktuell berechneten Kurve auf den Alterungszustand des Dreiwegekatalysators 12 geschlossen.

Die vorstehend anhand der Figuren 2 und 3 beschriebenen Verfahren können alternativ oder additiv von dem Steuergerät 18 durchgeführt werden. Die Verfahren können in periodisch sich wiederholenden Zeitpunkten oder unter bestimmten Bedingungen der Brennkraftmaschine 1 durchgeführt werden.

## Patentansprüche

1. Verfahren zum Betreiben eines Dreiwegekatalysators (12) einer Brennkraftmaschine (1) insbesondere eines Kraftfahrzeugs, bei dem der Dreiwegekatalysator (12) mit Stickoxiden beaufschlagt wird, bei dem die NOx-Emissionen nach dem Dreiwegekatalysator (12) gemessen werden, wobei ein Übergang von einem fetten Betrieb in einen mageren Betrieb der Brennkraftmaschine (1) durchgeführt wird, **dadurch gekennzeichnet, dass** die NOx-Rohemissionen der Brennnkraftmaschine (1) ermittelt werden, und dass aus den NOx-Rohemissionen und den gemessenen NOx-Emissionen auf den Alterungszustand des Dreiwegekatalysators (12) geschlossen wird.

2. Verfahren nach Anspruch 1, **dadurch gekennzeichnet, dass** aus den NOx-Rohemissionen und den gemessenen NOx-Emissionen die Konvertierung des Dreiwegekatalysators (12) berechnet wird.

3. Verfahren nach Anspruch 2, **dadurch gekennzeichnet, dass** die berechnete Konvertierung mit bekannten Konvertierungen für einen noch nicht gealterten Dreiwegekatalysator.(12) und/oder einen gealterten Dreiwegekatalysator (12) verglichen werden

4. Verfahren nach einem der Ansprüche 1 bis 3, **dadurch gekennzeichnet, dass** die gemessenen NOx-Emissionen mit bekannten NOx-Emissionen für einen noch nicht gealterten Dreiwegekatalysator (12) und/oder einen gealterten Dreiwegekatalysator (12) verglichen werden.

5. Verfahren nach einem der Ansprüche 1 bis 4, **dadurch gekennzeichnet, dass** ein Maximalwert und/oder ein Minimalwert und/oder eine Fläche und/oder eine Steilheit der gemessenen NOx-Emissionen bzw. der berechneten Konvertierung zur Ermittlung des Alterungszustands des Dreiwegekatalysators (12) herangezogen wird.

6. Verfahren nach einem der Ansprüche 1 bis 5, **gekennzeichnet durch** die Verwendung zur Diagnose des Dreiwegekatalysators (12)

7. Computer-Programm, **dadurch gekennzeichnet, dass** das Computer-Programm zur Anwendung in einem Verfahren nach einem der Ansprüche 1 bis 6 programmiert ist.

8. Computer-Programm-Produkt, **dadurch gekennzeichnet, dass** auf ihm ein Computer-Programm nach Anspruch 7 abgespeichert ist.

9. Steuergerät (18) für eine Brennkraftmaschine (1) insbesondere eines Kraftfahrzeugs, **dadurch gekennzeichnet, dass** das Steuergerät (18) zur Anwendung in einem Verfahren nach einem der Ansprüche 1 bis 6 hergerichtet ist.

10. Brennkraftmaschine (1) insbesondere für ein Kraftfahrzeug, **dadurch gekennzeichnet, dass** die Brennkraftmaschine (1) ein Steuergerät (18) nach Anspruch 9 aufweist.

## Revendications

1. Procédé pour faire fonctionner un catalyseur trois voies (12) dans un moteur à combustion interne (1) en particulier d'un véhicule automobile, selon lequel le catalyseur trois voies (12) est sollicité par de l'oxyde d'azote, les émissions de NOx étant mesurées en aval du catalyseur trois voies (12), et un passage du fonctionnement riche à un fonctionnement pauvre du moteur à combustion interne (1) étant effectué,
**caractérisé en ce que**
les émissions brutes de NOx du moteur à combustion interne (1) sont déterminées et une conclusion sur l'état de vieillissement du catalyseur trois voies (12) est déduite à partir des émissions brutes de NOx et des émissions mesurées de NOx.

2. Procédé selon la revendication 1,
**caractérisé en ce que**
la conversion du catalyseur trois voies (12) est calculée à partir des émissions brutes de NOx et des émissions mesurées de NOx.

3. Procédé selon la revendication 2,
**caractérisé en ce que**
la conversion calculée est comparée avec des conversions connues pour un catalyseur trois voies (12) non encore vieilli et/ou un catalyseur trois voies (12) vieilli.

4. Procédé selon l'une des revendications 1 à 3,
**caractérisé en ce que**
les émissions mesurées de NOx sont comparées avec des émissions connues de NOx pour un catalyseur trois voies (12) non encore vieilli et/ou un catalyseur trois voies (12) vieilli.

5. Procédé selon l'une des revendications 1 à 4,
**caractérisé en ce qu'**
une valeur maximale et/ou une valeur minimale et/ou une surface et/ou une pente des émissions mesurées de NOx et de la conversion connue sont prises pour la détermination de l'état de vieillissement du catalyseur trois voies (12).

6. Procédé selon l'une des revendications 1 à 5,
**caractérisé par**
l'utilisation pour le diagnostic du catalyseur trois voies (12).

7. Programme informatique,
**caractérisé en ce que**
le programme informatique est programmé pour être utilisé dans un procédé selon l'une des revendications 1 à 6.

8. Produit pour programme informatique,
**caractérisé en ce qu'**
un programme informatique y est enregistré selon la revendication 7.

9. Appareil de commande (18) pour un moteur à combustion interne (1), en particulier d'un véhicule automobile,
**caractérisé en ce que**
l'appareil de commande (18) est préparé pour son utilisation dans un procédé selon l'une des revendications 1 à 6.

10. Moteur à combustion interne (1), en particulier d'un véhicule automobile,
**caractérisé en ce que**
le moteur à combustion interne (1) présente un appareil de commande (18) selon la revendication 9.

## Claims

1. Method for operating a three-way catalytic converter (12) of an internal combustion engine (1) in particular of a motor vehicle, in which the three-way catalytic converter (12) is exposed to nitrogen oxides, in which the NOx emissions downstream of the three-way catalytic converter (12) are measured, with a transition from rich-burn operation to lean-burn operation of the internal combustion engine (1) being carried out, **characterized in that** the untreated NOx emissions from the internal combustion engine (1) are determined, and **in that** conclusions are drawn as to the ageing state of the three-way catalytic converter (12) from the untreated NOx emissions and the measured NOx emissions.

2. Method according to Claim 1, **characterized in that** the conversion rate achieved by the three-way catalytic converter (12) is calculated from the untreated NOx emissions and the measured NOx emissions.

3. Method according to Claim 2, **characterized in that** the calculated conversion rate is compared with known conversion rates for an as yet unaged three-way catalytic converter (12) and/or an aged three-way catalytic converter (12).

4. Method according to one of Claims 1 to 3, **characterized in that** the measured NOx emissions are compared with known NOx emissions for an as yet unaged three-way catalytic converter (12) and/or an aged three-way catalytic converter (12).

5. Method according to one of Claims 1 to 4, **characterized in that** a maximum value and/or a minimum value and/or an area and/or a gradient of the measured NOx emissions or the calculated conversion rate is used to determine the ageing state of the three-way catalytic converter (12).

6. Method according to one of Claims 1 to 5, **characterized by** its use for the diagnosis of a three-way catalytic converter (12).

7. Computer program, **characterized in that** the computer program is programmed for use in a method according to one of Claims 1 to 6.

8. Computer program product, **characterized in that** a computer program according to Claim 7 is stored on it.

9. Control unit (18) for an internal combustion engine (1) in particular of a motor vehicle, **characterized in that** the control unit (18) is designed for use in a method according to one of Claims 1 to 6.

10. Internal combustion engine (1) in particular for a motor vehicle, **characterized in that** the internal combustion engine (1) has a control unit (18) according to Claim 9.
